Europäisches Patentamt

European Patent Office

Office européen des brevets

(19)

(11) Publication number: **0 064 104**
**B1**

# (12) EUROPEAN PATENT SPECIFICATION

(45) Date of publication of patent specification: **09.04.86**

(21) Application number: **81301976.7**

(22) Date of filing: **05.05.81**

(51) Int. Cl.⁴: **A 23 J 1/02,** A 23 J 1/04,
A 23 L 1/31

(54) Meat protein product and process.

(43) Date of publication of application:
**10.11.82 Bulletin 82/45**

(45) Publication of the grant of the patent:
**09.04.86 Bulletin 86/15**

(84) Designated Contracting States:
**AT BE CH DE FR GB IT LI LU NL SE**

(56) References cited:
**GB-A- 844 979**
**US-A-3 598 606**

(73) Proprietor: **Atteck, Louis Augustus George
39 St. Pauls Avenue
Kenton Harrow Middlesex HA3 9PR (GB)**

(72) Inventor: **Atteck, Louis Augustus George
39 St. Pauls Avenue
Kenton Harrow Middlesex HA3 9PR (GB)**

(74) Representative: **Gura, Henry Alan et al
MEWBURN ELLIS & CO. 2/3 Cursitor Street
London EC4A 1BQ (GB)**

Courier Press, Leamington Spa, England.

## Description

This invention relates to the production of a soluble protein product from animal meat and to the product so produced.

Various methods of processing animal meats, to obtain protein products that can be preserved longer from deterioration or that can be marketed for particular needs or tastes, are known. Typical of one group of methods, as in the production of fish meal, the raw meat is finely ground and, after a possible cooling step, is washed and dried to give a concentrated solid product. Any soluble protein in the wash liquid may be recovered by insolubilising it: US 3 598 606 describes the recovery of soluble protein in this way by treating it with a condensed phosphate and also proposes that any initially soluble material can be dissolved from the finely ground solids in a saline solution to be insolubilised separately.

It is also known to produce a soluble material from meat by hydrolysis, this process breaking down the protein into smaller molecules such as peptides or amino acids, which are then dried to a powder for convenience of handling and storage. While these powders are readily soluble in water to be used to augment the meat content of a recipe and/or to add flavour, they have a limited value. In particular their ability to be used as a protein extender for the natural meat content of the recipe or a flavouring is restricted by the fact they are incapable of forming gels. To get the required gelling properties in meat recipes, comminution of good quality fresh meat in brine with added food phosphates will release soluble protein, but if for reasons of economy the quality of the meat or the processing time is reduced, the amount of soluble protein is very much reduced. Protein from other sources, e.g. soya protein isolates can also be used to give gelling properties in processed meat products, but in most instances legal requirements insist that these substances can only be used in addition to a minimum meat content of the final product.

It is an object of the present invention to provide a process for extracting soluble protein from animal meat for use as a meat substitute or equivalent while avoiding these disadvantages.

According to one aspect of the invention there is provided a process for the production of a soluble protein material from meat muscle, characterised in that chopped or comminuted pre-rigor muscle protein is treated in a saline solution to dissolve lean meat protein in the solution and at least a part of the water content is removed to obtain soluble material that is capable of gelling when heated in solution, the temperature of the water-soluble protein material being restricted substantially throughout the process to not more than 40°C.

In myofibrillar protein, which forms the predominant constituent of animal fibre, the largest constituent is myosin which is soluble in strong salt solutions and gels at about 50°C, while sarcoplasmic proteins, a lesser constituent of the meat muscle, is soluble in weak salt solutions and gels at about 37°C. It is therefore necessary to limit the maximum temperature of the solubilised product because if it is subjected to excessive heat, denaturation will take place and the material cannot afterwards be resolubilised to produce a heat-setting gel. For this reason the maximum temperature reached by the material for any significant period during processing should be limited to less than 35°C—40°C, and preferably it is not allowed to rise substantially above 25—30°C other than momentarily.

It is possible, for example to subject the material to a drying process such as spray-drying in which there is only brief exposure to a higher temperature, so that denaturation is not allowed to occur.

According to another aspect of the invention there is provided a concentrated meat protein product comprising soluble natural meat protein, salt and comminuted insoluble meat protein, and having gelling properties in aqueous solution at temperatures above 50°C. The product may be produced in the form of a concentrated solution, but is preferably a powder.

In a preferred form of the process according to the invention, the muscle protein is finely divided while immersed in the treatment solution, and there results a mixture of solute-containing liquid and finely divided solids. This resulting protein mixture is concentrated to reduce bulk, for example to produce a powder, as by spray-drying, and in either case the product may include all or part of the comminuted solids remaining from the process.

Any form of lean animal meat (this term including fish) in the pre-rigor state can be used for the process according to the invention, it being possible to extract the soluble protein relatively easily by chopping or comminuting the material in a solution of salt (sodium chloride) or salt and food phosphates (i.e. polymeric phosphates such as those commercially available under the trade names "Curaphos" and "Tari").

As meat muscle passes through rigor mortis chemical changes occur, and one significant reaction is the combination of actin and myosin present to form largely insoluble actomyosin, so that post rigor meat would yield a much smaller proportion of soluble protein.

In the performance of the method according to the invention, after slaughtering the animal it is hot-boned, i.e. meat is removed from the still-warn hung carcase, and after being trimmed of fat as far as is practical the pre-rigor meat muscle is chopped while immersed in the brine solution in any suitable comminuting or chopping apparatus, e.g. a bowl chopper, and a colloid mill can be used additionally to help effect solution. The action by which the meat protein passes into solution is further influenced by a number of factors including the brine composition, temperature and pH value.

The composition of the brine solution will depend upon the type of meat muscle to be treated: in general relatively small quantities of food phosphate will be used because of the requirement to limit the quantities of such substances in the final product, and it is possible to omit phosphates from the solution completely. For pre-rigor pork leg-meat, one suitable brine solution contains 7.5% sodium chloride and 0.16% food phosphate by weight in water. For pre-rigor beef, a rather higher sodium chloride content of 10.5% by weight is preferred in the brine, with the same 0.16% food phosphate addition. For fish, a still higher salt concentration is required, e.g. 12%, with the same quantity of phosphates.

These solutions are able to treat half their own weight of lean meat which is comminuted in the solution in a conventional bowl chopper operating at 5000 rpm or higher. This ratio of brine to meat is chosen to obtain a solution of acceptable viscosity for spraying while limiting the liquid content in order to minimise the evaporation costs. The extraction of the soluble protein into solution is indicated by the formation of a thick, syrupy slurry with some thixotropic character in which the finely comminuted non-soluble material is suspended. During the process, the temperature of the mixture is kept to a maximum of preferably 25°C, and not more than 30°C. If required the slurry can be diluted with water or brine to reduce its viscosity before spray-drying but care must be taken to ensure this does not throw some protein out of solution.

The optimum spraying temperature parameters must be arrived at for each type of spray dryer as the residence time will differ considerably. As an example of the drying stage in a dryer having a downdraft chamber leading to a cyclone, the spray air inlet temperature may be 154°C and the outlet temperature 64°C. The exposure of the slurry to these elevated temperatures is so brief (some few seconds) that the temperature reached by the solubilised products is well below the air temperature and they are heated for so short a time that there is no significant denaturation of the material that might make it insoluble.

It is possible to vary the contents of the treatment solution described above. As the amount of salt in the brine solution is reduced the gelling power of the product at 50°C is reduced and there is more insoluble material present. For pre-rigor meat the salt concentrations given above can be reduced by about 2% (i.e. to 5.5% and 8.5% respectively) but further reduction may lead to undesirable results, although weak gels can still be obtained at salt concentrations of 4%: reduction of the phosphate content below 0.16% similarly results in weaker gel formation. The sodium chloride content can be increased to as much as 15% or more in each case although it will generally be undesirable to have such large quantities of salt in the final product.

In addition, the use of relatively large quantities of phosphates tends to produce too viscous a slurry which requires considerable dilution before spray drying. As that increases the process costs in addition to adding to the phosphate content of the product it is preferably avoided. The use of a brine without phosphates also appears to increase the solution viscosity undesirably however.

Ratios of brine to lean meat greater than 2:1 by weight, as referred to above, can be used but the process costs are increased because a greater mass of water must be evaporated to concentrate or dry the mixture. Smaller ratios are possible but undesirable because of the increase of viscosity of the mixture. Also, there is some risk of reducing the yield if the amount of solution is reduced excessively.

The final product from the processes described in the above examples will be a mixture of soluble protein with salt and phosphate (if this last constituent was in the brine), and also some finely divided insoluble meat fibres. The product in dry powder form can be mixed with the weight of water required to give a regenerated mass equivalent to lean meat, i.e. a weight ratio of 3:1 water to protein. In practice, however, the product is useful in diluted form.

Thus, where the solids are separated from the solution containing the solubilised protein as in the final example above, the product is capable of forming gels in very low concentrations when heated. For example, a mixture of some (three) 3% or more of the spray-dried soluble product by weight in water will give strong translucent gels on heating above 50°C: with further heating beyond that temperature, the gel clouds and stiffens as denaturation increases, similarly to the behaviour of fresh meat. However, if some proportion of insoluble fibres is present with the soluble extract, it is found that in certain applications these can reinforce the denaturated gel and strengthen its bonding power.

The product has useful properties as a binder, an emulsifier and for the enhancement of succulence, texture and water-holding properties. It can in particular be used in all meat recipes and formulations as a replacement for all or a part of the high grade lean meat content because of the binding effect it has during cooking. For example, in a sausage meat recipe, the use of 4% by weight of the dried product (assuming one half of that is protein and the other half is salt and phosphates) will replace 8% by weight of lean meat, equal to one quarter of the lean meat content.

The product can moreover be used for treating the surfaces of large pieces of meat, and in cured or uncured whole meats such as ham and roast pork by adding it to the brine injected into the meat, to improve binding, water-holding and succulence. The material can also be used to produce reformed meat products and semi-analogues of meat in conjunction with vegetable-protein fibres. For all these uses, the invention is able to provide a product that can be supplied economically, is simple to use, has uniform properties and is stable at ambient temperatures.

While it is preferred to produce the material in the form of a powder for easier handling and freedom from bacteriological attack, it is also possible to produce it as concentrated viscous solution.

## Claims for the Contracting States: BE, CH, DE, FR, GB, IT, LI, LU, NL, SE

1. A process for the production of a soluble protein material from meat muscle, characterised in that chopped or comminuted pre-rigor muscle protein is treated in a saline solution to dissolve lean meat protein in the solution and at least part of the water content is removed to obtain a concentrated product with soluble material that is capable of gelling when heated in aqueous solution, the temperature of the water-soluble protein material being restricted substantially throughout the process to not more than 40°C.

2. A process according to Claim 1 wherein the meat muscle is finely divided in said solution.

3. A process according to Claim 1 or Claim 2 wherein the solution is spray-dried to produce said material in powder form.

4. A process according to any one of Claims 1 to 3 wherein the saline solution also contains a food phosphate.

5. A process according to any one of Claims 1 to 4, wherein the temperature of said material is restricted to not more than 30°C.

6. A concentrated meat protein product characterised in that it comprises soluble natural meat protein, salt, and comminuted insoluble meat protein, and has gelling properties in aqueous solution at temperatures above 50°C.

7. A meat protein powder characterised in that it comprises actin and myosin and has gelling properties in aqueous solution at temperatures above 50°C.

8. An aqueous protein solution characterised in that it comprises actin and myosin and has gelling properties at temperatures above 50°C.

9. A protein product according to any one of Claims 6 to 8 comprising the whole content of lean meat muscle as a mixture of water-soluble protein and finely divided insoluble particles.

10. A meat product in which a protein product according to any one of Claims 6 to 9 has been included as an additive.

## Claims for the Contracting State: AT

1. A process for the production of a soluble protein material from meat muscle, characterised in that chopped or comminuted pre-rigor muscle protein is treated in a saline solution to dissolve lean meat protein in the solution and at least part of the water content is removed to obtain a concentrated product with soluble material that is capable of gelling when heated in aqueous solution, the temperature of the water-soluble protein material being restricted substantially throughout the process to not more than 40°C.

2. A process according to Claim 1 wherein the meat muscle is finely divided in said solution.

3. A process according to Claim 1 or Claim 2 wherein the solution is spray-dried to produce said material in powder form.

4. A process according to any one of Claims 1 to 3 wherein the saline solution also contains a food phosphate.

5. A process according to any one of Claims 1 to 4, wherein the temperature of said material is restricted to not more than 30°C.

## Patentansprüche: für die Vertragsstaaten: BE, CH, DE, FR, GB, IT, LI, LU, NL, SE

1. Ein Verfahren zur Herstellung eines löslichen Eiweißmaterials aus Fleischmuskel, dadurch gekennzeichnet, daß Eiweiß von einem vor Eintritt der Totenstarre gehackten oder fein zerkleinerten Muskel in einer Salzlösung behandelt wird, um das Eiweiß des mageren Fleisches in der Lösung zu lösen und wenigstens einen Teil des Wassergehaltes zu entfernen, um ein konzentriertes Produkt mit löslichem Material zur erhalten, das fähig ist, zu gelieren, wenn es in einer wässerigen Lösung erwärmt wird, wobei die Temperatur des wasserlöslichen Eiweißmaterials während des gesamten Verfahrens im wesentlichen auf nicht mehr als 40°C beschränkt wird.

2. Ein Verfahren nach Anspruch 1, worin der Fleischmuskel in der genannten Lösung fein verteilt wird.

3. Ein Verfahren nach Anspruch 1 oder 2, worin die Lösung sprühgetrocknet wird, um das genannte Material in Pulverform herzustellen.

4. Ein Verfahren nach einem der Ansprüche 1 bis 3, worin die Salzlösung auch ein Lebensmittelphosphat enthält.

5. Ein Verfahren nach einem der Ansprüche 1 bis 4, worin die Temperatur des genannten Materials auf nicht mehr als 30°C beschränkt wird.

6. Ein konzentriertes Fleischeiweißprodukt, dadurch gekennzeichnet, daß es lösliches natürliches Fleischeiweiß, Salz und feinteiliges unlösliches Fleischeiweiß enthält und Geliereigenschaften in einer wässerigen Lösung bei Temperaturen von mehr als 50°C besitzt.

7. Ein Fleischeiweißpulver, dadurch gekennzeichnet, daß es Actin und Myosin enthält und Geliereigenschaften in wässerigen Lösungen bei Temperaturen von mehr als 50°C besitzt.

8. Ein wässerige Eiweißlösung, dadurch gekennzeichnet, daß sie Actin und Myosin enthält und Geliereigenschaften bei Temperaturen von mehr als 50°C besitzt.

9. Ein Eiweißprodukt nach einem der Ansprüche 6 bis 8, umfassend den gesamten Gehalt an magerem Fleischmuskel als Gemisch von wasserlöslichem Eiweiß und feinteiligen unlöslichen Teilchen.

10. Ein Fleischprodukt, in dem ein Eiweißprodukt nach einem der Ansprüche 6 bis 9 als Zusatzstoff eingeschlossen ist.

## Patentansprüche für der Vertragsstaat: AT

1. Ein Verfahren zur Herstellung eines löslichen Eiweißmaterials aus Fleischmuskel, dadurch gekennzeichnet, daß Eiweiß, das aus einem gehackten oder fein zerkleinerten Muskel vor dem Eintreten der Totenstarre gewonnen wird, in einer Salzlösung behandelt wird, um das Eiweiß des mageren Fleisches in der Lösung zu lösen, und daß wenigstens ein Teil des Wassergehaltes entfernt wird, um ein konzentriertes Produkt mit löslichem Material zu erhalten, das fähig ist, zu gelieren, wenn es in einer wässerigen Lösung erwärmt wird, und daß die Temperatur des wasserlöslichen Eiweißmaterials im wesentlichen während des gesamten Verfahrens auf nicht mehr als 40°C beschränkt wird.

2. Ein Verfahren nach Anspruch 1, worin der Fleischmuskel in der genannten Lösung fein verteilt wird.

3. Ein Verfahren nach Anspruch 1 oder 2, worin die Lösung sprühgetrocknet wird, um das genannte Material in Pulverform herzustellen.

4. Ein Verfahren nach einem der Ansprüche 1 bis 3, worin die Salzlösung auch ein Lebensmittelphosphat enthält.

5. Ein Verfahren nach einem der Ansprüche 1 bis 4, worin die Temperatur des genannten Materials auf nicht mehr als 30°C beschränkt ist.

**Revendications pour les Etats Contractants: BE, CH, DE, FR, GB, IT, LI, LU, NL, SE**

1. Procédé pour la production d'une matière de protéines solubles du muscle de la viande, caractérisé en ce que la protéine du muscle haché ou broyé pré-rigidité est traitée dans une solution saline pour dissoudre la protéine de viande maïgre dans la solution et au moins une partie de la teneur en eau est retirée pour obtenir un produit concentré avec la matière soluble qui est capable de se gélifier lorsqu'elle est chauffée en solution aqueuse, la température de la matière à base de protéines solubles dans l'eau étant restreinte sensiblement dans tout le procédé à pas plus de 40°C.

2. Procédé selon la revendication 1 où le muscle de la viande est finement subdivisé dans ladite solution.

3. Procédé selon la revendication 1 ou la revendication 2 où la solution est séchée par pulvérisation pour produire ladite matière sous forme de poudre.

4. Procédé selon l'une quelconque des revendications 1 à 3 où la solution saline contient également un phosphate alimentaire.

5. Procédé selon l'une quelconque des revendications 1 à 4 où la température de ladite matière est restreinte à pas plus de 30°C.

6. Produit à base de protéines de viande concentré caractérisé en ce qu'il comprend de la protéine de viande naturelle soluble, du sel et de la protéine de viande broyée insoluble, et a des propriétés de gélification en solution aqueuse à des températures au-delà de 50°C.

7. Poudre de protéines de viande caractérisée en ce qu'elle comprend de l'actine et de la myosine et a des propriétés de gélification en solution aqueuse à des températures au-delà de 50°C.

8. Solution aqueuse de protéines caractérisée en ce qu'elle contient de l'actine et de la myosine et a des propriétés de gélification à des températures au-delà de 50°C.

9. Produit à base de protéines selon les revendications 6 à 8 comprenant la teneur complète du muscle de viande maigre sous la forme d'un mélange de la protéine soluble dans l'eau et des particules insolubles finement subdivisées.

10. Produit de viande où un produit à base de protéines selon l'une quelconque des revendications 6 à 9 a été incorporé en tant qu'additif.

**Revendications pour l'Etat Contractant: AT**

1. Procédé pour la production d'une matière à base de protéines solubles à partir du muscle de la viande, caractérisé en ce que la protéine du muscle haché ou broyé avant rigidité est traitée dans une solution saline pour dissoudre la protéine de la viande maigre dans la solution et au moins une partie de la teneur en eau est retirée pour obtenir un produit concentrée avec la matière soluble qui est capable de se gélifier lorsqu'elle est chauffée en solution aqueuse, la température de la matière à base de protéines solubles dans l'eau étant restreinte sensiblement dans tout le procédé à pas plus de 40°C.

2. Procédé selon la revendication 1 où le muscle de la viande est finement subdivisé dans ladite solution.

3. Procédé selon la revendication 1 ou la revendication 2 où la solution est séchée par pulvérisation pour produire ladite matière sous forme de poudre.

4. Procédé selon l'une quelconque des revendications 1 à 3 où la solution saline contient également un phosphate alimentaire.

5. Procédé selon l'une quelconque des revendications 1 à 4 où la température de ladite matière est restreinte à pas plus de 30°C.